# EUROPEAN PATENT SPECIFICATION

(11) **EP 3 248 811 B1**
(45) Date of publication and mention of the grant of the patent: **28.08.2019**
(21) Application number: 16764673.6
(22) Date of filing: 26.02.2016
(51) Int. Cl.: B60C 11/03, B60C 23/19

(54) **TIRE**
REIFEN
PNEU

(30) Priority: 18.03.2015 JP 2015054692; 02.04.2015 JP 2015075905
(43) Date of publication of application: 29.11.2017
(73) Proprietor: Bridgestone Corporation, Tokyo 104-8340 (JP)
(72) Inventor: MATSUNAGA, Midori, Tokyo 104-8340 (JP); YAMAGUCHI, Masashi, Tokyo 104-8340 (JP)
(74) Representative: Oxley, Robin John George
(86) International application number: PCT/JP2016/055958
(87) International publication number: WO 2016/147843

(56) References cited:
- WO-A1-2011/145721
- WO-A1-2014/099491
- WO-A1-2014/142349
- WO-A1-2016/009912
- CN-A- 103 158 444
- JP-A- 2003 159 911
- JP-A- 2005 067 267
- JP-A- 2010 000 883
- JP-A- 2015 040 023

## Description

### BACKGROUND OF THE INVENTION

### Field of the Invention

The present invention relates to a tire provided with a plurality of blocks on a tread portion.

### Related Background of the Invention

Conventionally, a block pattern having a plurality of blocks is formed on a tread portion of various tires such as a tire for heavy load. During running of a vehicle to which such tires are attached, strain is generated in the tread portion due to deformation of a member in the tread portion of the tire. In addition, the tread portion generates heat due to viscoelasticity of rubber, and thus a temperature of the tread portion rises. Strain and temperature of the tread portion are main factors affecting durability of the tread portion, and in order to enhance durability of the tread portion, strain and temperature rise, generated in the tread portion, are required to be coped with.

For coping with this, in conventional tires, generation of strain is suppressed in the tread portion mainly by adding a reinforcing member into the tread portion or by raising rigidity of the tread portion. However, in this case, along with the increase in the number of members in the tire and a weight of the tire, a cost of the tire possibly rises. Accordingly, regarding durability of the tread portion, suppression of the temperature rise by cooling the tread portion is required. In addition, cooling of the tread portion may become more important in the peripheral portion of the specific circumferential groove in the tread portion depending on the internal structure of the tread portion or the condition of use of the tire, the realization of such a demand is required, too.

Here, in a tire provided with a plurality of blocks, generally, the plurality of blocks is arranged between a plurality of circumferential grooves, and a plurality of lateral grooves is formed between the blocks . In such a tire, heat radiation is promoted by an air flow generated in the circumferential groove, and the tread portion is cooled. However, it is difficult to adjust heat radiation of the circumferential groove by controlling the air flow in the circumferential groove. Therefore, in a tire provided with a plurality of blocks on both sides of the specific circumferential groove in a tire width direction, increased heat radiation may sometimes occur in the circumferential groove outside the plurality of blocks in the tire width direction than in the circumferential groove between the plurality of blocks. In this case, a cooling effect of the tread portion by the circumferential groove between the plurality of blocks cannot be increased, and thus it is difficult to enhance the heat radiation of the circumferential groove.

Particularly, in a tread center portion, it is demanded for improvement of a wear life thereof to thick a tread rubber, and coping with a temperature rise becomes important. However, in a tire provided with a plurality of blocks on both sides of the circumferential groove in the tread center portion, increased heat radiation may sometimes occur in the circumferential groove outside the plurality of blocks in the tire width direction than in the circumferential groove on the tread center portion. In this case, a cooling effect of the tread portion by the circumferential groove in the tread center portion cannot be increased. Therefore, it is difficult to suppress the temperature rise of the tread portion on the tread center portion.

Moreover, a tire in which the temperature rise of the tread portion is suppressed by a block groove formed in a shoulder block row has been known (refer to Patent Literature 1) .

However, in the conventional tire described in Patent Literature 1, a block groove is required to be formed in a tread of the block along a tire circumferential direction. Therefore, the block groove cannot be formed in some cases depending on a shape of the block **or** a required performance of the block.

Attention is also drawn to the disclosure of JP2003-159911.

### Prior Art

### Patent Literature

Patent Literature 1: Japanese Patent Laid-Open No. 2010-125998

### SUMMARY OF THE INVENTION

### Problems to be Solved by Invention

The present invention was made in view of the above-described conventional problems and an object thereof is, in a tire provided with a plurality of blocks on both sides of the circumferential groove in a tire width direction, to enhance the heat radiation of the circumferential groove and to increase a cooling effect of the tread portion by the circumferential groove.

### Means for solving Problems

The present invention is a tire as claimed in claim 1

### EFFECTS OF THE INVENTION

According to the present invention, in the tire provided with the plurality of blocks on both sides of the circumferential groove in the tire width direction, heat radiation of the circumferential groove can be enhanced, and thus a cooling effect of the tread portion by the circumferential groove can be increased.

### BRIEF DESCRIPTION OF THE DRAWINGS

Fig. 1 is a plan view illustrating a tread pattern of a tire of the first embodiment;
Fig. 2 is a plan view illustrating a part of Fig. 1;
Fig. 3 is a plan view illustrating a second block corner portion formed in a curved shape;
Fig. 4 is a plan view illustrating a block of a tire which is not according to the present invention, but which is useful for understanding the present invention;
Fig. 5 is a plan view illustrating a block of the tire;
Fig. 6 is a plan view illustrating a block of a tire which is not according to the present invention, but which is useful for understanding the present invention;
Fig. 7 is a plan view illustrating a tread pattern of a tire of the second embodiment;
Fig. 8 is a plan view illustrating a part of Fig. 7;
Fig. 9 is a plan view illustrating a block of a tire which is not according to the present invention, but which is useful for understanding the present invention;
Fig. 10 is a plan view illustrating a block of the tire;
Fig. 11 is a plan view illustrating a block of a tire which is not according to the present invention, but which is useful for understanding the present invention;
Fig. 12 is a plan view illustrating a tread pattern of a conventional product; and
Fig. 13 is a plan view illustrating a tread pattern of a conventional product.

### DESCRIPTION OF THE PREFERRED EMBODIMENTS

An embodiment of a tire of the present invention will be described by referring to the attached drawings.

The tire of the present embodiment is a pneumatic tire for a vehicle (a tire for heavy load or a tire for passenger car, for example) and is formed so as to have a known structure by a general tire constituent member. Namely, the tire includes a pair of bead portions, a pair of side wall portions located outside the pair of bead portions in a tire radial direction, a tread portion in contact with a road surface, and a pair of shoulder portions located between the tread portion and the pair of side wall portions. Furthermore, the tire includes a pair of bead cores, a carcass arranged between the pair of bead cores, a belt arranged on an outer periphery side of the carcass, and a tread rubber having a predetermined tread pattern.

### (The first embodiment)

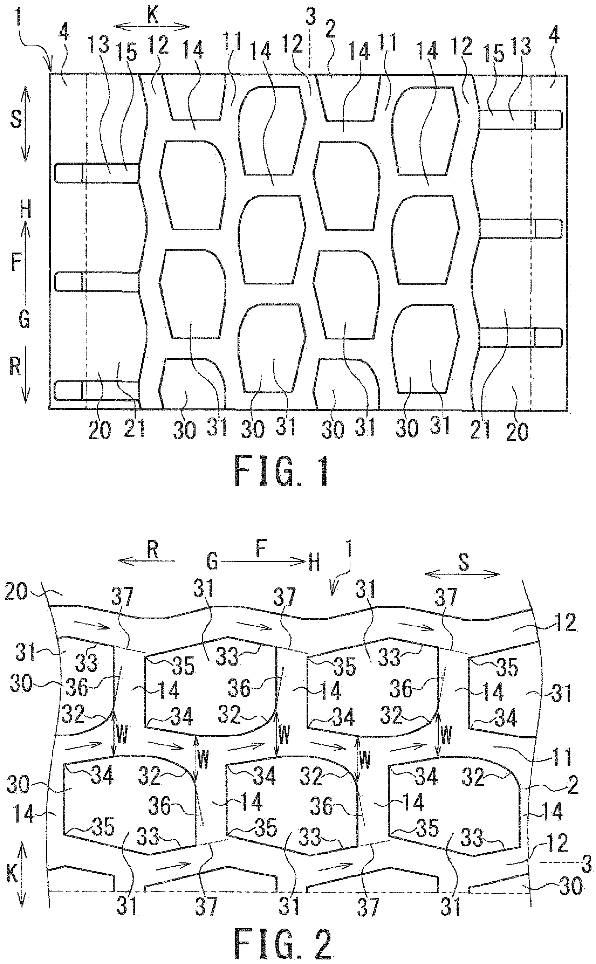

Fig. 1 is a plan view illustrating a tread pattern of a tire 1 of the first embodiment and schematically illustrates a part of a tread portion 2 in a tire circumferential direction S.

Note that the tire 1 is a tire for which a rotating direction during forward movement of the vehicle is designated and it rotates in the tire rotating direction R during forward movement of the vehicle. The tire rotating direction R is designated corresponding to the tread pattern of the tire 1. The tire 1 is attached to the vehicle so that the tire rotating direction R is matched. In addition, a tread center portion 3 of the tire 1 is a center part of the tread portion 2 in a tire width direction K, and a tire equatorial plane is located on the tread center portion 3. The shoulder portion 4 of the tire 1 is located on an outside of the tread portion 2 in the tire width direction K.

As illustrated, the tire 1 includes a plurality of circumferential grooves (a first circumferential groove 11, a second circumferential groove 12), a plurality of lug grooves 13, a plurality of lateral grooves 14, and a plurality of block rows (a shoulder block row 20, a control block row 30), in the tread portion 2. Each of the circumferential groove 11 and the circumferential groove 12 is a main groove (circumferential direction main groove) extending in the tire circumferential direction S, and is continuously formed along the tire circumferential direction S. Moreover, among the plurality of circumferential grooves formed in the tread portion 2, the first circumferential groove 11 is a circumferential groove whose heat radiation should be enhanced. Two second circumferential grooves 12 are adjacent to both sides of the first circumferential groove 11 in the tire width direction K so as to assist improvement of the heat radiation of the first circumferential groove 11. The first circumferential groove 11 is arranged between two second circumferential grooves 12 and constitutes a group of circumferential grooves with two second circumferential grooves 12 on both sides thereof.

The tire 1 includes two groups of circumferential grooves each of which comprises one first circumferential groove 11 and two second circumferential grooves 12, having two first circumferential grooves 11 and three second circumferential grooves 12. The two first circumferential grooves 11 are formed on both sides of the tread center portion 3 in the tire width direction K, and each of the first circumferential grooves 11 is arranged between the two second circumferential grooves 12. The one second circumferential groove 12 of the three second circumferential grooves 12 is formed on the tread center portion 3 and is arranged inside the two first circumferential grooves 11 in the tire width direction K. In addition, each of the two second circumferential grooves 12 is formed between the first circumferential groove 11 and the shoulder portion 4 (tread end) on both sides of the tread center portion 3 and is arranged outside the first circumferential groove 11 in the tire width direction K. The second circumferential groove 12 on the tread center portion 3 is arranged between the two first circumferential grooves 11 and constitutes a group of circumferential grooves with each of the two first circumferential grooves 11. Each of the two first circumferential grooves 11 is arranged between the second circumferential groove 12 on the tread center portion 3 and the second circumferential groove 12 on the shoulder portion 4 side.

The tread portion 2 is partitioned by the first circumferential groove 11 and the second circumferential groove 12, so that a plurality of the block rows (two shoulder block rows 20 and four control block rows 30) is formed on the tread portion 2. The shoulder block row 20 and the control block row 30 are land portions extending along the tire circumferential direction S, and have a plurality of blocks 21 and 31, respectively.

The shoulder block row 20 has a plurality of lug grooves 13 and is arranged on an outermost side in the tire width direction K in the tread portion 2. The lug groove 13 extends in the tire width direction K and is formed from the second circumferential groove 12 to the shoulder portion 4. The plurality of blocks 21 of the shoulder block row 20 is sequentially arranged in the tire circumferential direction S, and the lug groove 13 is formed between the blocks 21 adjacent in the tire circumferential direction S. In addition, the lug groove 13 is formed on the shoulder portion 4 side of the second circumferential groove 12 and is opened to the second circumferential groove 12. The tire 1 includes a raised portion 15 formed within each of the lug grooves 13. The raised portion 15 is raised from a groove bottom of the lug groove 13 and connects groove walls (wall surfaces of the block 21) on both sides of the lug groove 13. Here, the raised portion 15 is a tie bar. At least a part of the lug groove 13 is shallower than the second circumferential groove 12 by the raised portion 15.

The control block row 30 is a block row to control an air flow in the first circumferential groove 11 and the second circumferential groove 12 and formed between the first circumferential groove 11 and the second circumferential groove 12. Further, the control block row 30 has a plurality of lateral grooves 14 and is arranged on both sides of the first circumferential groove 11 in the tire width direction K. The plurality of lateral grooves 14 is width direction grooves extending in the tire width direction K and is formed from the first circumferential groove 11 to the second circumferential groove 12 in each of the control block rows 30. Furthermore, the plurality of lateral grooves 14 is formed between the first circumferential groove 11 and each of the second circumferential grooves 12 and is opened to the first circumferential groove 11 and the second circumferential groove 12.

The plurality of blocks 31 of the control block row 30 is sequentially arranged in the tire circumferential direction S, and the lateral groove 14 is formed between the blocks 31 adjacent in the tire circumferential direction S. The plurality of lateral grooves 14 is formed at one side and the other side of the first circumferential groove 11 in the tire width direction K and extends in both directions in the tire width direction K from the first circumferential groove 11. Furthermore the lateral grooves 14 at one side and the other side of the first circumferential groove 11 in the tire width direction K are alternately arranged along the tire circumferential direction S and are alternately opened to the first circumferential groove 11.

As described above, the tire 1 includes the plurality of blocks 31 and the plurality of lateral grooves 14 arranged on both sides of the first circumferential groove 11 in the tire width direction K. The plurality of blocks 31 and the plurality of lateral grooves 14 are arranged between the two second circumferential grooves 12. The plurality of lateral grooves 14 is arranged apart from each other in the tire circumferential direction S and crosses the control block row 30 between the first circumferential groove 11 and the second circumferential groove 12. The plurality of blocks 31 is partitioned by the first circumferential groove 11, the two second circumferential grooves 12 and the plurality of lateral grooves 14 on the tread portion 2, and each of the blocks 31 is formed in a predetermined polygonal shape when viewed from an outside in the tire radial direction.

The tire 1 is attached to the vehicle and rotates in the tire rotating direction R with running (forward movement) of the vehicle. During running of the vehicle (tire rotation) by forward movement of the vehicle, an air flow in a predetermined direction is generated in the first circumferential groove 11 and the second circumferential groove 12. The air flow is a relative flow (wind) of air generated by rotation of the tire 1 and is generated in a direction opposite to the tire rotating direction R. An arrow F illustrated in Fig. 1 is a direction of the air flow generated in the first circumferential groove 11 and the second circumferential groove 12. The air flow in the same direction is generated in the first circumferential groove 11 and the second circumferential groove 12. In the tire 1 of the first embodiment, by the plurality of blocks 31 of the control block row 30 formed between the first circumferential groove 11 and each of the second circumferential grooves 12, the air flow is controlled, and the heat radiation of the first circumferential groove 11 and the second circumferential groove 12 is adjusted. As a result, the heat radiation of the first circumferential groove 11 is enhanced. Hereinafter, the adjustment of the heat radiation will be described in detail.

Fig. 2 is a plan view illustrating a part of Fig. 1 and illustrates the first circumferential groove 11 and the two second circumferential grooves 12 at one side (left side of Fig. 1) in a state in which Fig. 1 is rotated clockwise by 90°. The first circumferential groove 11 and the two second circumferential grooves 12 at the other side (right side of Fig. 1) have the same constitution as the first circumferential groove 11 and the two second circumferential grooves 12 at one side, respectively, which will be described as follows.

As illustrated, the tire 1 includes the one first circumferential groove 11 and the two second circumferential grooves 12 arranged on both sides of the first circumferential groove 11 in the tire width direction K. Each block 31 of the plurality of blocks 31 has a first wall surface 32 on the first circumferential groove 11 side, a second wall surface 33 on the second circumferential groove 12 side, a first block corner portion 34 on the first circumferential groove 11 side, and a second block corner portion 35 on the second circumferential groove 12 side. In the first circumferential groove 11 and the second circumferential groove 12 (refer to the air flow direction F), the air flows from an upstream side G of the air flow toward the downstream side H of the air flow and cools the tread portion 2.

The first wall surface 32 of the block 31 is formed from a position where the lateral groove 14 on the downstream side H of the air flow is opened to the first circumferential groove 11, toward the upstream side G of the air flow. The second wall surface 33 of the block 31 is formed from a position where the lateral groove 14 on the downstream side H of the air flow is opened to the second circumferential groove 12, toward the upstream side G of the air flow. The first wall surface 32 is located in the first circumferential groove 11, and the second wall surface 33 is located in the second circumferential groove 12. Here, the first wall surface 32 is a curved surface inclined toward an inside of the lateral groove 14 on the downstream side H of the air flow with respect to the tire circumferential direction S. The first wall surface 32 is inclined to the outside in a groove width direction of the first circumferential groove 11 with respect to the tire circumferential direction S toward the downstream side H of the air flow. In addition, the first wall surface 32 is a projecting surface curved in an arc shape and smoothly connects to the wall surface of the block 31 around it. On the first circumferential groove 11 side of the block 31, the first wall surface 32 is curved toward the inside of the lateral groove 14 on the downstream side H of the air flow. In contrast to this, the second wall surface 33 is a plane inclined to the outside in the groove width direction of the second circumferential groove 12 with respect to the tire circumferential direction S toward the downstream side H of the air flow. The second wall surface 33 is inclined to the first circumferential groove 11 side between the two second circumferential grooves 12.

The first block corner portion 34 of the block 31 is a corner portion of the block 31 formed at a position where the lateral groove 14 on the upstream side G of the air flow is opened to the first circumferential groove 11, and is formed at a position where the wall surface of the block 31 in the lateral groove 14 and the wall surface of the block 31 in the first circumferential groove 11 intersect with each other. The second block corner portion 35 of the block 31 is a corner portion of the block 31 formed at a position where the lateral groove 14 on the upstream side G of the air flow is opened to the second circumferential groove 12, and is formed at a position where the wall surface of the block 31 in the lateral groove 14 and the wall surface of the block 31 in the second circumferential groove 12 intersect with each other. The wall surfaces of the block 31 are formed in directions different from each other at the first block corner portion 34 and the second block corner portion 35 as boundaries.

The groove width W of the first circumferential groove 11 gradually increases toward the downstream side H of the air flow (lateral groove 14 on the downstream side H) at the first wall surface 32 of the block 31. When the two blocks 31 on the upstream side G and the downstream side H of the air flow adjacent in the tire circumferential direction S are viewed, a virtual surface (first virtual surface) 36 extended from the first wall surface 32 of the block 31 on the upstream side G is extended to the outside in the groove width direction of the first circumferential groove 11. The first virtual surface 36 is an extension surface (virtual extension surface) obtained by virtually extending the first wall surface 32 on the downstream side H of the air flow and smoothly continues from the first wall surface 32 so as to form the same plane as the first wall surface 32. In all the blocks 31 of the control block row 30, the first virtual surface 36 of the block 31 on the upstream side G is extended toward the inside of the lateral groove 14 (lateral groove 14 on the downstream side H) between the two blocks 31 without intersecting with the first block corner portion 34 of the block 31 on the downstream side H. The first virtual surface 36 passes through the lateral groove 14 and intersects with the block 31 (wall surface of the block 31) on the downstream side H in the lateral groove 14. Alternatively, the first virtual surface 36 passes through the lateral groove 14 and is extended to the second circumferential groove 12.

When the two blocks 31 on the upstream side G and the downstream side H of the air flow adjacent in the tire circumferential direction S are viewed, a virtual surface (second virtual surface) 37 extended from the second wall surface 33 of the block 31 on the upstream side G is located on the outside of the lateral groove 14 (lateral groove 14 on the downstream side H) between the two blocks 31. The second virtual surface 37 is an extension surface (virtual extension surface) obtained by virtually extending the second wall surface 33 on the downstream side H of the air flow and smoothly continues from the second wall surface 33 so as to form the same plane as the second wall surface 33. In addition, the second virtual surface 37 is extended toward the block 31 on the downstream side H and is arranged along the second circumferential groove 12. In all the blocks 31 of the control block row 30, the second virtual surface 37 of the block 31 on the upstream side G intersects with the second block corner portion 35 of the block 31 on the downstream side H. Alternatively, the second virtual surface 37 deviates from the second block corner portion 35 in the tire width direction K and passes through a position in the second circumferential groove 12 partitioning the block 31 on the downstream side H. When the second virtual surface 37 passes through the position in the second circumferential groove 12, the second virtual surface 37 passes through the position in the second circumferential groove 12 which is apart from the second block corner portion 35 in the tire width direction K, on the downstream side H of the air flow. In addition, the second virtual surface 37 intersects with the block 31 (wall surface of the block 31) on the downstream side H in the second circumferential groove 12.

In the tire 1 described above, the second virtual surface 37 intersects with the second block corner portion 35 or passes through the position in the second circumferential groove 12, and thus the air having flowed along the second wall surface 33 becomes hard to flow into the lateral groove 14 easily. Accordingly, the inflow of air from the second circumferential groove 12 to the lateral groove 14 and the first circumferential groove 11 is suppressed, and occurrences of backward flow, swirl flow, and stagnation of the air in the first circumferential groove 11 are prevented. The air in the first circumferential groove 11 is not disturbed by the air flowing in from the lateral groove 14, and smoothly flows toward the downstream side H in the first circumferential groove 11. Along with this, a flow rate of the air which is a cooling medium increases in the first circumferential groove 11, and cooling of the tread portion 2 is promoted. In addition, since the air flow in the second circumferential groove 12 deviates from the second block corner portion 35, a pressure rise of the air at the second block corner portion 35 is suppressed.

Since the groove width W of the first circumferential groove 11 gradually increases at the first wall surface 32, a pressure of the air around the first wall surface 32 gradually becomes low toward the downstream side H of the air flow. Along with this, the air is drawn from the upstream side G of the first wall surface 32 toward the periphery of the first wall surface 32 in the first circumferential groove 11, and the air flow is accelerated. In addition, since the air flow hits the first block corner portion 34, the pressure of the air rises at the first block corner portion 34. As a result, the pressure of the air at the first block corner portion 34 becomes higher than the pressure of the air at the second block corner portion 35 in the lateral groove 14, and thus the air flows from the first block corner portion 34 toward the second block corner portion 35. Accordingly, an air flow from the first circumferential groove 11 toward the lateral groove 14 is generated, and thus the inflow of air from the lateral groove 14 to the first circumferential groove 11 is suppressed. Furthermore, the air flow in the first circumferential groove 11 is further accelerated. An air flow is concentrated in the first circumferential groove 11 by the second circumferential grooves 12 and the plurality of blocks 31 located on both sides of the first circumferential groove 11 in the tire width direction K, and thus the air flow in the first circumferential groove 11 is accelerated still more.

As described above, in the tire 1, heat radiation of the first circumferential groove 11 and the second circumferential groove 12 can be adjusted by controlling the air flow during running of a vehicle. Furthermore, the heat radiation can be promoted by accelerating the air flow in the first circumferential groove 11. Therefore, the heat radiation of the first circumferential groove 11 can be enhanced, and thus the cooling effect of the tread portion 2 by the first circumferential groove 11 can be increased. Along with this, the temperature rise of the tread portion 2 can be suppressed by cooling the tread portion 2 in the first circumferential groove 11 and the peripheral portion of the first circumferential groove 11. Durability of the tread portion 2 can also be effectively enhanced by lowering the temperature around the belt in the tread portion 2, in which a heat generation easily occurs. Further, since the tread rubber of the tread portion 2 can be thickened, the wear life of the tire 1 can be improved.

When the first virtual surface 36 is extended toward the inside of the lateral groove 14, the air flowing along the first wall surface 32 easily flows into the lateral groove 14. In addition, the first wall surface 32 is inclined toward the inside of the lateral groove 14 on the downstream side H of the air flow, and thus the air easily flows from the first circumferential groove 11 toward the lateral groove 14. When the first wall surface 32 is a curved surface, the air smoothly flows along the first wall surface 32, and the air flow directed toward the lateral groove 14 is easily generated. Accordingly, the pressure of the air can be reliably lowered around the first wall surface 32, and the air flow in the first circumferential groove 11 can be further accelerated.

When the groove width of the lateral groove 14 is wider than the groove width W of the first circumferential groove 11, the inflow of air from the second circumferential groove 12 is increased, and thus backward flow of the air in the first circumferential groove 11 easily occurs. In the same way, when the groove width of the second circumferential groove 12 is wider than the groove width of the lateral groove 14, backward flow of the air toward the first circumferential groove 11 easily occurs, and thus the cooling effect by the first circumferential groove 11 may be affected. Therefore, it is preferable for the groove width W of the first circumferential groove 11 to be wider than the groove width of the lateral groove 14, and it is preferable for the groove width of the lateral groove 14 to be wider than the groove width of the second circumferential groove 12. Thus, backward flow of the air can more surely be suppressed. In addition, since the groove width W of the first circumferential groove 11 is wider than the groove width of the lateral groove 14 and the groove width of the second circumferential groove 12, the flow rate of the air in the first circumferential groove 11 is increased, and thus the cooling effect by the first circumferential groove 11 can be promoted.

The groove width W of the first circumferential groove 11 is permissible as long as it gradually increases toward the downstream side H of the air flow at least on the first wall surface 32. Therefore, the groove width W of the first circumferential groove 11 may be gradually increased toward the downstream side H of the air flow at the upstream side G of the first wall surface 32, in addition to the first wall surface 32. In addition, between the second circumferential groove 12 and the shoulder portion 4, ribs extending in the tire circumferential direction S may be arranged without the lug grooves 13 being formed. The first block corner portion 34 and the second block corner portion 35 may be corner portions formed in bent shapes or may be corner portions formed in curved shapes.

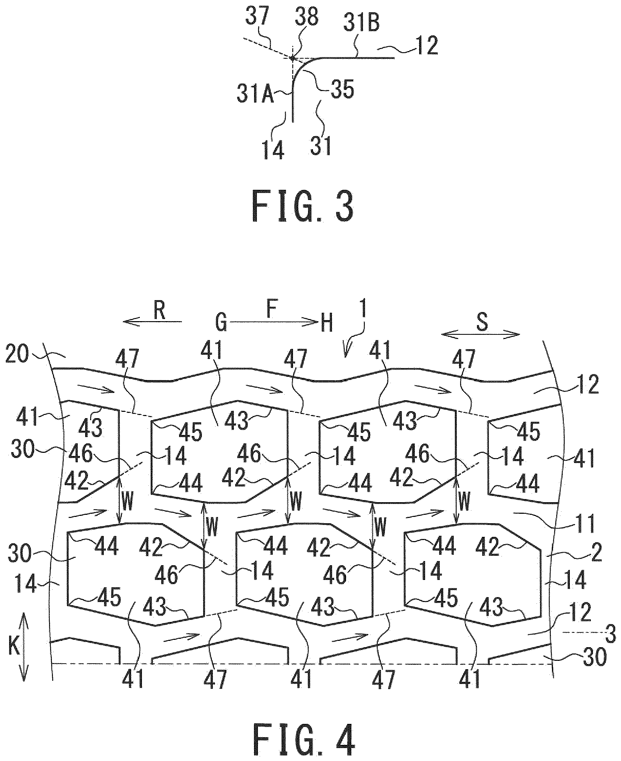

Fig. 3 is a plan view illustrating the second block corner portion 35 formed in a curved shape.

In this case, the second virtual surface 37 passes through, for example, a virtual intersection position 38, and intersects with the second block corner portion 35 as illustrated. The virtual intersection position 38 is a position where virtual surfaces extended from wall surfaces 31A and 31B of the block 31 on the both sides of the second block corner portion 35 intersect with each other. The one wall surface 31A is a wall surface of the block 31 in the lateral groove 14, and the other wall surface 31B is a wall surface of the block 31 in the second circumferential groove 12. The air easily flows from the lateral groove 14 to the second circumferential groove 12, by forming the second block corner portion 35 into a curved shape.

Subsequently, another example of the block will be described. Each of the following blocks is an example in which a part of the shape of the block 31 is changed, and an effect similar to the above-described effect is exerted. In each block, the same names as those in the block 31 are given to the same constitution as the block 31, and detailed explanation of each constitution will be omitted. Moreover, in the following description, explanation for the same matters as the already-described matters will be omitted.

Figs. 4 to 6 are plan views illustrating blocks 41, 51 and 61 of the tire 1 and illustrate a part of tread patterns including the blocks 41, 51 and 61 similarly to Fig. 2.

The block 41 illustrated in Fig. 4 (which is not according to the present invention, but which is useful for understanding the present invention) has a first wall surface 42, a second wall surface 43, a first block corner portion 44, and a second block corner portion 45. A first virtual surface 46 is an extension surface extended from the first wall surface 42, and a second virtual surface 47 is an extension surface extended from the second wall surface 43. Here, only the first wall surface 42 is different from the first wall surface 32 of the block 31. The first wall surface 42 of the block 41 is a plane inclined toward the inside of the lateral groove 14 on the downstream side H of the air flow with respect to the tire circumferential direction S. The first wall surface 42 is inclined to the outside in the groove width direction of the first circumferential groove 11 with respect to the tire circumferential direction S toward the downstream side H of the air flow. In this first wall surface 42, the air can easily flow from the first circumferential groove 11 toward the lateral groove 14. Therefore, the pressure of the air can be reliably lowered around the first wall surface 42, and the air flow in the first circumferential groove 11 can be further accelerated.

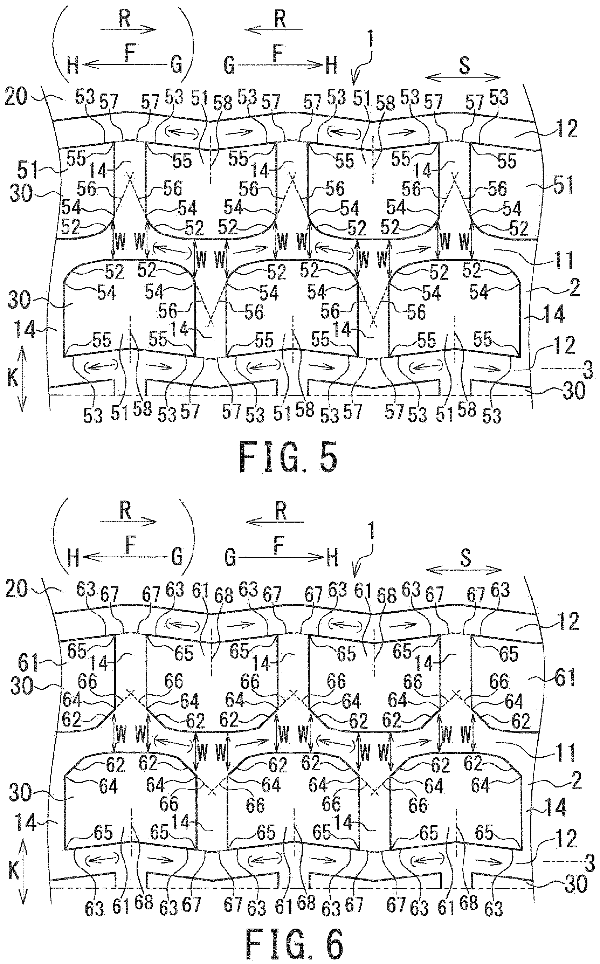

In the block 51 illustrated in Fig. 5, in a plan view where the block 51 is viewed from an outside in the tire radial direction, the block 51 is formed line-symmetrically with respect to a center line 58 passing through the center in the tire circumferential direction S. Therefore, the block 51 has a first wall surface 52, a second wall surface 53, a first block corner portion 54, and a second block corner portion 55, on each of both sides of the center line 58. In addition, a first virtual surface 56 is an extension surface extended from each of the first wall surfaces 52 on the both sides of the center line 58, and a second virtual surface 57 is an extension surface extended from each of the second wall surfaces 53 on the both sides of the center line 58. The second wall surface 53 is a plane inclined to the inside in the groove width direction of the second circumferential groove 12 with respect to the tire circumferential direction S toward the downstream side H of the air flow. The two second wall surfaces 53 intersect with each other on the center line 58. In this block 51, the tire rotating direction R can be set in both directions of the tire circumferential direction S. Namely, even if the air flow direction F becomes an opposite direction, the block 51 satisfies the conditions similar to those of the block 31 and acts in the same way as the block 31. Therefore, it is not necessary to designate the tire rotating direction R when the tire is to be attached, and convenience of a user is improved.

In the block 61 illustrated in Fig. 6 (which is not according to the present invention, but which is useful for understanding the present invention), in the same way as the block 51, the block 61 is formed line-symmetrically with respect to a center line 68 passing through the center in the tire circumferential direction S, in a plan view where the block 61 is viewed from the outside in the tire radial direction. Accordingly, the block 61 has a first wall surface 62, a second wall surface 63, a first block corner portion 64, and a second block corner portion 65 on each of both sides of the center line 68. Moreover, a first virtual surface 66 is an extension surface extended from each of the first wall surfaces 62 on both sides of the center line 68, and a second virtual surface 67 is an extension surface extended from each of the second wall surfaces 63 on the both sides of the center line 68. The first wall surface 62 of the block 61 is a plane inclined toward the inside of the lateral groove 14 on the downstream side H of the air flow with respect to the tire circumferential direction S in the same way as the first wall surface 42 of the block 41. The second wall surface 63 is a plane inclined to the inside in the groove width direction of the second circumferential groove 12 with respect to the tire circumferential direction S toward the downstream side H of the air flow. The two second wall surfaces 63 intersect with each other on the center line 68. In this block 61, in the same way as the block 51, the tire rotating direction R can be set in both directions of the tire circumferential direction S. Namely, even if the air flow direction F becomes an opposite direction, the block 61 satisfies the conditions similar to those of the block 31, and the effect similar to that of the block 31 is exerted. Therefore, it is not necessary to designate the tire rotating direction R when the tire is to be attached, and convenience of a user is improved.

The first embodiment described above is an example of the tire 1 including two groups of circumferential grooves each of which comprises one first circumferential groove 11 and two second circumferential grooves 12. The tire 1 has only to include at least one group of circumferential grooves . Accordingly, one group of circumferential grooves may be formed on the tire 1, or more than one group of circumferential grooves may be formed on the tire 1.

### (The second embodiment)

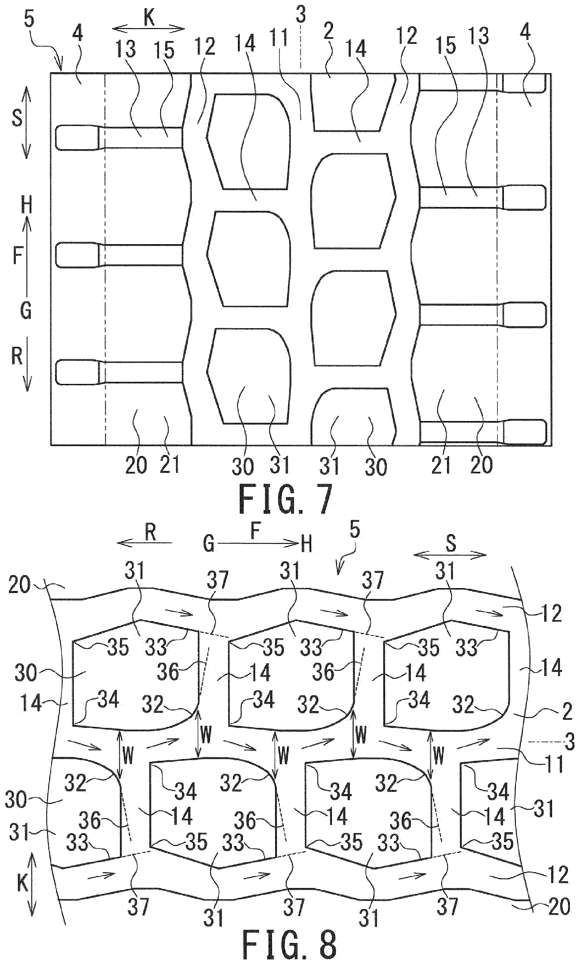

Fig. 7 is a plan view illustrating a tread pattern of a tire 5 of the second embodiment and schematically illustrates a part of a tread portion 2 in a tire circumferential direction S similarly to Fig. 1. Fig. 8 is a plan view illustrating a part of Fig. 7 and illustrates a part between the two second circumferential grooves 12 in a state in which Fig. 7 is rotated clockwise by 90°.

The tire 5 of the second embodiment is an example in which a part of the tire 1 of the first embodiment is changed, and an effect similar to that of the tire 1 is exerted. In the tire 5, the same names as those in the tire 1 are given to the same constitution as the tire 1, and detailed explanation of each constitution will be omitted. Moreover, in the following description, explanation for the same matters as the already-described matters will be omitted.

As illustrated, the tire 5 includes the one circumferential groove 11, the two second circumferential grooves 12, a plurality of lug grooves 13, a plurality of lateral grooves 14, the two shoulder block rows 20, and the two control block rows 30, in the tread portion 2. The first circumferential groove 11 is arranged on the tread center portion 3, and the two second circumferential grooves 12 are adjacent to both sides of the first circumferential groove 11 in the tire width direction K. The first circumferential groove 11 is a center circumferential groove of the tread portion 2, and is arranged between the two circumferential grooves 12. The second circumferential groove 12 is an outside circumferential groove formed outside the first circumferential grooves 11 in the tire width direction K, and is arranged between the first circumferential groove 11 and the shoulder portion 4 (tread end). The two second circumferential grooves 12 are arranged on both sides of the tread center portion 3 and the first circumferential groove 11 in the tire width direction K, respectively, and are arranged between the tread center portion 3 and the shoulder portions 4, respectively.

The shoulder block row 20 has a plurality of lug grooves 13 and a plurality of blocks 21. The control block row 30 has a plurality of lateral grooves 14 and a plurality of blocks 31. Here, the control block row 30 is a center block row and is arranged on a center area of the tread portion 2 which includes the tread center portion 3. The two control block rows 30 are arranged on both sides of the tread center portion 3 and the first circumferential groove 11 in the tire width direction K, respectively. The plurality of lateral grooves 14 extends from the first circumferential groove 11 toward both outsides in the tire width direction K thereof. The first circumferential groove 11 extends along the wall surfaces on the tread center portion 3 side of the plurality of blocks 31. The second circumferential groove 12 extends along the wall surfaces on the shoulder portion 4 side of the plurality of blocks 31.

The block 31 of the tire 5 has the same constitution as the block 31 of the tire 1 as shown in Fig. 2. Each block 31 of the plurality of blocks 31 has a first wall surface 32 on the tread center portion 3 side (inside in the tire width direction K), a second wall surface 33 on the shoulder portion 4 side (outside in the tire width direction K), a first block corner portion 34 on the tread center portion 3 side, and a second block corner portion 35 on the shoulder portion 4 side. A first virtual surface 36 is an extension surface extended from the first wall surface 32, and a second virtual surface 37 is an extension surface extended from the second wall surface 33. The first wall surface 32 is a curved surface inclined to the outside in the tire width direction K (shoulder portion 4 side) with respect to the tire circumferential direction S toward the downstream side H of the air flow. The groove width W of the first circumferential groove 11 gradually increases toward the downstream side H of the air flow at the first wall surface 32 of the block 31.

On the tread center portion 3 side of the block 31, the first wall surface 32 is curved toward the inside of the lateral groove 14 on the downstream side H of the air flow. The second wall surface 33 is a plane inclined to the inside in the tire width direction K (tread center portion 3 side) with respect to the tire circumferential direction S toward the downstream side H of the air flow. When the two blocks 31 on the upstream side G and the downstream side H of the air flow adjacent in the tire circumferential direction S are viewed, the first virtual surface 36 of the block 31 on the upstream side G is extended to the outside in the tire width direction K. In all the blocks 31 of the control block row 30, the first virtual surface 36 is extended toward the inside of the lateral groove 14 between the two blocks 31. The second virtual surface 37 of the block 31 on the upstream side G intersects with the second block corner portion 35 of the block 31 on the downstream side H, or passes through a position in the second circumferential groove 12 on the outside (shoulder portion 4 side) of the second block corner portion 35 in the tire width direction K. When the second virtual surface 37 passes through a position in the second circumferential groove 12, the second virtual surface 37 passes through a position in the second circumferential groove 12 which is apart from the second block corner portion 35 in the tire width direction K.

In the tire 5, the heat radiation of the first circumferential groove 11 located on the tread center portion 3 can be enhanced, and thus the cooling effect of the tread portion 2 by the first circumferential groove 11 can be increased. Along with this, the temperature rise of the tread portion 2 can be suppressed by cooling the tread portion 2 in the tread center portion 3 and the peripheral portion of the tread center portion 3. Regarding durability of the tread portion 2, for example, since an occurrence of separation in the tread portion 2 can be suppressed, the separation-resistance of the tread portion 2 can be improved.

One or more circumferential grooves may be formed between the second circumferential groove 12 and the shoulder portion 4 in addition to the first circumferential groove 11 and the two second circumferential grooves 12. In this case, a plurality of block rows or ribs is arranged between the second circumferential groove 12 and the shoulder portion 4. Further, the blocks 41, 51 and 61 as shown in Figs. 4 to 6 may be arranged in the control block row 30 of the tire 5 instead of the blocks 31.

Subsequently, other examples of the block will be described. Each of the following blocks is an example in which a part of the shape of the block 31 is changed, and an effect similar to the above-described effect is exerted. In each block, the same names as those in the block 31 are given to the same constitution as the block 31, and detailed explanation of each constitution will be omitted. Moreover, in the following description, explanation for the same matters as the already-described matters will be omitted.

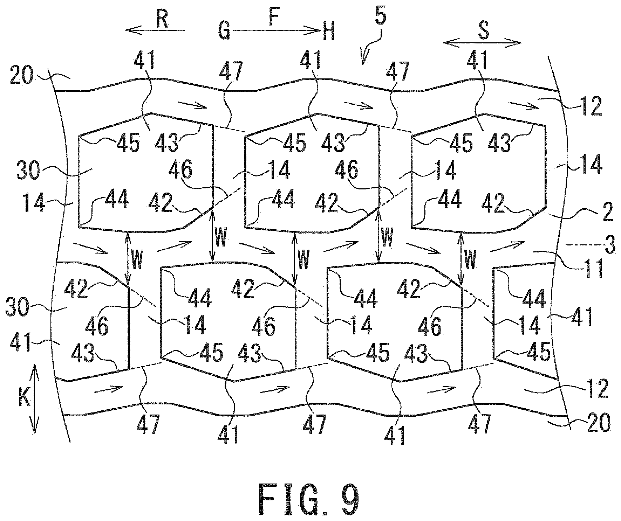

Figs. 9 to 11 are plan views illustrating blocks 41, 71 and 81 of the tire 5 and illustrate a part of tread patterns including the blocks 41, 71 and 81 similarly to Fig. 8.

The block 41 illustrated in Fig. 9 (which is not according to the present invention, but which is useful for understanding the present invention) has the same constitution as the block 41 as shown in Fig. 4. The block 41 has a first wall surface 42, a second wall surface 43, a first block corner portion 44, and a second block corner portion 45. A first virtual surface 46 is an extension surface extended from the first wall surface 42, and a second virtual surface 47 is an extension surface extended from the second wall surface 43. The first wall surface 42 of the block 41 is a plane inclined to the outside in the tire width direction K (shoulder portion 4 side) with respect to the tire circumferential direction S toward the downstream side H of the air flow. The first wall surface 42 is inclined toward the inside of the lateral groove 14 on the downstream side H of the air flow. In this first wall surface 42, the air can easily flow from the first circumferential groove 11 toward the lateral groove 14. Therefore, the pressure of the air can be reliably lowered around the first wall surface 42, and the air flow in the first circumferential groove 11 can be further accelerated.

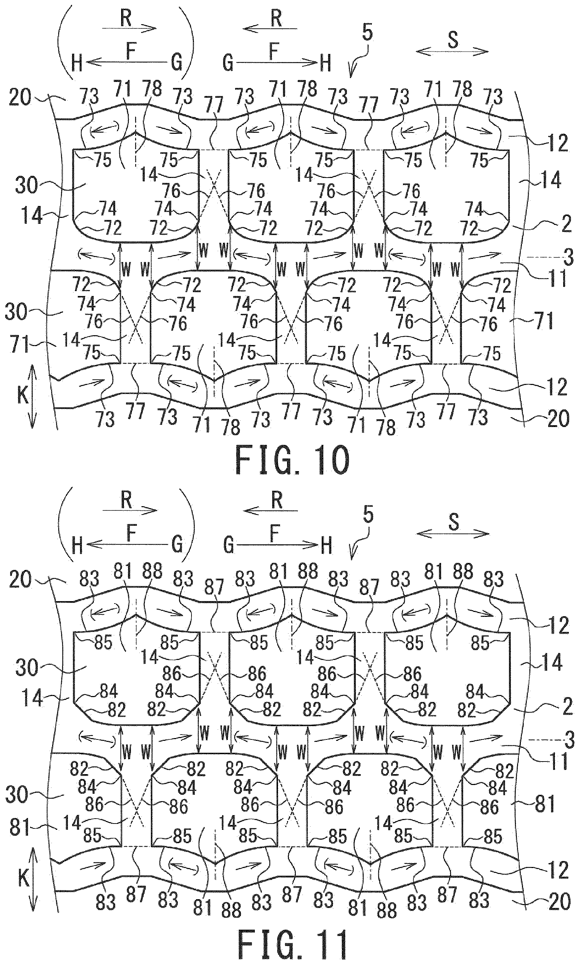

In the block 71 illustrated in Fig. 10, in a plan view where the block 71 is viewed from an outside in the tire radial direction, the block 71 is formed line-symmetrically with respect to a center line 78 passing through the center in the tire circumferential direction S. Therefore, the block 71 has a first wall surface 72, a second wall surface 73, a first block corner portion 74, and a second block corner portion 75, on each of both sides of the center line 78. In addition, a first virtual surface 76 is an extension surface extended from each of the first wall surfaces 72 on the both sides of the center line 78, and a second virtual surface 77 is an extension surface extended from each of the second wall surfaces 73 on the both sides of the center line 78. The second wall surface 73 is a curved surface recessed in the block 71, and the two second wall surfaces 73 intersect with each other on the center line 78. In this block 71, the tire rotating direction R can be set in both directions of the tire circumferential direction S. Namely, even if the air flow direction F becomes an opposite direction, the block 71 satisfies the conditions similar to those of the block 31 and acts in the same way as the block 31. Therefore, it is not necessary to designate the tire rotating direction R when the tire is to be attached, and convenience of a user is improved.

In the block 81 illustrated in Fig. 11 (which is not according to the present invention, but which is useful for understanding the present invention), in the same way as the block 71, the block 81 is formed line-symmetrically with respect to a center line 88 passing through the center in the tire circumferential direction S, in a plan view where the block 81 is viewed from the outside in the tire radial direction. Accordingly, the block 81 has a first wall surface 82, a second wall surface 83, a first block corner portion 84, and a second block corner portion 85 on each of both sides of the center line 88. Moreover, a first virtual surface 86 is an extension surface extended from each of the first wall surfaces 82 on both sides of the center line 88, and a second virtual surface 87 is an extension surface extended from each of the second wall surfaces 83 on the both sides of the center line 88. The second wall surface 83 is a curved surface recessed in the block 81, and the two second wall surfaces 83 intersect with each other on the center line 88. The first wall surface 82 of the block 81 is a plane inclined to the outside in the tire width direction K with respect to the tire circumferential direction S toward the downstream side H of the air flow in the same way as the first wall surface 42 of the block 41. The first wall surface 82 is inclined toward the inside of the lateral groove 14 on the downstream side H of the air flow. In this block 81, in the same way as the block 71, the tire rotating direction R can be set in both directions of the tire circumferential direction S. Namely, even if the air flow direction F becomes an opposite direction, the block 81 satisfies the conditions similar to those of the block 31, and the effect similar to that of the block 31 is exerted. Therefore, it is not necessary to designate the tire rotating direction R when the tire is to be attached, and convenience of a user is improved.

When the tire 1 is a tire for heavy load (such as a tire for truck/bus, for example), a heat generation amount of the tread portion 2 tends to be larger. Therefore, the present invention is suitable for the tire for heavy load. However, the present invention can be applied to various tires other than the tire for heavy load.

### (Tire test)

In order to confirm the effects of the tire 1 of the first embodiment, tires of two practical examples (referred to as embodied products 1, 2) and a tire of the conventional example (referred to as a conventional product 1) were produced, and their performances were evaluated. Each of the embodied products 1, 2 includes a plurality of blocks 51 illustrated in Fig. 5 in the control block row 30. In the embodied product 2, the groove width W of the first circumferential groove 11 is wider than the groove width of the lateral groove 14, and the groove width of the lateral groove 14 is wider than the groove width of the second circumferential groove 12. That is, in the embodied product 2, the whole of the first circumferential groove 11 is wider than the widest part of the lateral groove 14, and the whole of the lateral groove 14 is wider than the widest part of the second circumferential groove 12. The condition of the groove width of the embodied product 1 differs from the condition of the groove width of the embodied product 2. In particular, in the embodied product 1, the widest part of the first circumferential groove 11 is wider than the lateral groove 14 and the second circumferential groove 12, and the lateral groove 14 and the second circumferential groove 12 are formed so as to have the equivalent groove width. The conventional product 1 is different from the embodied product 1 in the plurality of blocks of the control block row 30.

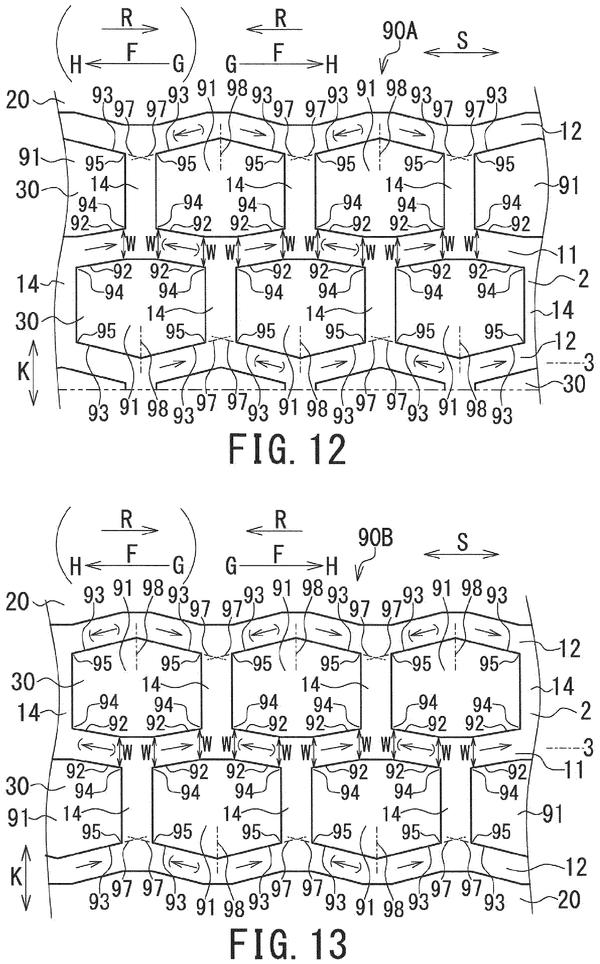

Fig. 12 is a plan view illustrating a tread pattern of the conventional product 1 and illustrates a part of the tread pattern similarly to Fig. 5.

As illustrated, in a tire 90A of the conventional product 1, a block 91 is formed line-symmetrically with respect to a center line 98 passing through the center in the tire circumferential direction S, in a plan view of the block 91 of the control block row 30 when viewed from the outside in the tire radial direction. Furthermore, the block 91 has a first wall surface 92, a second wall surface 93, a first block corner portion 94, and a second block corner portion 95, on each of both sides of the center line 98. A second virtual surface 97 is an extension surface extended from each of the second wall surfaces 93 on both sides of the center line 98. When the two blocks 91 on the upstream side G and the downstream side H of the air flow adjacent in the tire circumferential direction S are viewed, the second virtual surface 97 of the block 91 on the upstream side G is extended toward the inside of the lateral groove 14 between the two blocks 91 and intersects with the block 91 on the downstream side H in the lateral groove 14. The groove width W of the first circumferential groove 11 is a constant width at the first wall surface 92.

A drum durability test was conducted using the embodied products 1, 2 and the conventional product 1, under the following conditions:
Tire size: 11R22.5
Rim width: 7.50
Tire load: 2740 kgf (=26.9 kN)
Tire internal pressure: 700 kPa
Drum speed: 65 km/h
Temperature during test: 38°C

In the test, the embodied products 1, 2 and the conventional product 1 were brought into contact with an outer circumferential surface of a drum, and the same load was applied to the embodied products 1, 2 and the conventional product 1. In that state, the drum was rotated, and the embodied products 1, 2 and the conventional product 1 were rotated (made to run) by the drum. Thereby, traveling distances sufficient for belts of the embodied products 1, 2 and the conventional product 1 to endure were measured, and belt durability of the embodied products 1, 2 and the conventional product 1 was evaluated. Furthermore, heat transfer rate at the groove bottom of the first circumferential groove 11 was measured in the embodied products 1, 2 and the conventional product 1, and heat radiation of the first circumferential groove 11 was evaluated.

**[Table 1]**

| | EMBODIED PRODUCT 1 | EMBODIED PRODUCT 2 | CONVENTIONAL PRODUCT 1 |
|---|---|---|---|
| HEAT TRANSFER RATE AT GROOVE BOTTOM OF FIRST CIRCUMFERENTIAL GROOVE | 150 | 153 | 100 |
| BELT DURABILITY INDICATED BY TRAVELING DISTANCE | 115 | 120 | 100 |

Table 1 shows test results of the embodied products 1, 2 and the conventional product 1. The test results are expressed by index with the conventional product 1 at 100 and indicate that the larger the numerical value is, the higher the performances.

As shown in Table 1, the heat transfer rate (150) of the embodied product 1 and the heat transfer rate (153) of the embodied product 2 are remarkably higher than the heat transfer rate of the conventional product 1. As a result, it is known that in the embodied products 1, 2, the heat radiation of the first circumferential groove 11 is enhanced. Furthermore, the belt durability (115) of the embodied product 1 and the belt durability (120) of the embodied product 2 are higher than the belt durability of the conventional product 1. It is known that in the embodied products 1, 2, the cooling effect by the first circumferential groove 11 becomes higher, and the belt durability is enhanced. The heat transfer rate of the embodied product 2 is higher than the heat transfer rate of the embodied product 1 and the belt durability of the embodied product 2 is higher than the belt durability of the embodied product 1. From these, it is known that in the embodied product 2, the heat radiation of the first circumferential groove 11 is enhanced, and thus the cooling effect by the first circumferential groove 11 becomes higher.

In order to confirm the effects of the tire 5 of the second embodiment, tires of two practical examples (referred to as embodied products 3, 4) and a tire of the conventional example (referred to as a conventional product 2) were produced, and their performances were evaluated. Each of the embodied products 3, 4 includes a plurality of blocks 71 illustrated in Fig. 10 in the control block row 30. In the embodied product 4, the groove width W of the first circumferential groove 11 is wider than the groove width of the lateral groove 14, and the groove width of the lateral groove 14 is wider than the groove width of the second circumferential groove 12. That is, in the embodied product 4, the whole of the first circumferential groove 11 is wider than the widest part of the lateral groove 14, and the whole of the lateral groove 14 is wider than the widest part of the second circumferential groove 12. The condition of the groove width of the embodied product 3 differs from the condition of the groove width of the embodied product 4. In particular, in the embodied product3, the widest part of the first circumferential groove 11 is wider than the lateral groove 14 and the second circumferential groove 12, and the lateral groove 14 and the second circumferential groove 12 are formed so as to have the equivalent groove width. The conventional product 2 is different from the embodied product 3 in the plurality of blocks of the control block row 30.

Fig. 13 is a plan view illustrating a tread pattern of the conventional product 2 and illustrates a part of the tread pattern similarly to Fig. 10.

As illustrated, in a tire 90B of the conventional product 2, the block 91 has the same constitution as the block 91 of the tire 90A as shown in Fig. 12.

A drum durability test was conducted using the embodied products 3, 4 and the conventional product 2, under the same conditions of the embodied products 1, 2 and the conventional product 1 described above. In the test, traveling distances sufficient for belts of the embodied products 3, 4 and the conventional product 2 to endure were measured, and belt durability of the embodied products 3, 4 and the conventional product 2 was evaluated. Further, traveling distances to occur the separation in the tread portion 2 of the embodied products 3, 4 and the conventional product 2 were measured, and the separation-resistance of the tread portion 2 of the embodied products 3, 4 and the conventional product 2 was evaluated. Furthermore, heat transfer rate at the groove bottom of the first circumferential groove 11 was measured in the embodied products 3, 4 and the conventional product 2, and heat radiation of the first circumferential groove 11 was evaluated.

**[Table 2]**

| | EMBODIED PRODUCT 3 | EMBODIED PRODUCT 4 | CONVENTIONAL PRODUCT 2 |
|---|---|---|---|
| HEAT TRANSFER RATE AT GROOVE BOTTOM OF FIRST CIRCUMFERENTIAL GROOVE | 150 | 153 | 100 |
| SEPARATION-RESISTANCE INDICATED BY TRAVELING DISTANCE | 120 | 130 | 100 |
| BELT DURABILITY INDICATED BY TRAVELING DISTANCE | 112 | 112 | 100 |

Table 2 shows test results of the embodied products 3, 4 and the conventional product 2. The test results are expressed by index with the conventional product 2 at 100 and indicate that the larger the numerical value is, the higher the performances.

As shown in Table 2, the heat transfer rate (150) of the embodied product 3 and the heat transfer rate (153) of the embodied product 4 are remarkably higher than the heat transfer rate of the conventional product 2. As a result, it is known that in the embodied products 3, 4, the heat radiation of the first circumferential groove 11 is enhanced. Further, the separation-resistance (120) of the embodied product 3 and the separation-resistance (130) of the embodied product 4 are higher than the separation-resistance of the conventional product 2. Furthermore, the belt durability (112) of the embodied product 3 and the belt durability (112) of the embodied product 4 are higher than the belt durability of the conventional product 2. It is known that in the embodied products 3, 4, the cooling effect by the first circumferential groove 11 becomes higher, and the separation-resistance and the belt durability is enhanced.

The heat transfer rate of the embodied product 4 is higher than the heat transfer rate of the embodied product 3. Further, the separation-resistance of the embodied product 4 is higher than the separation-resistance of the embodied product 3 and the belt durability of the embodied product 4 is equal to the belt durability of the embodied product 3. From these, it is known that in the embodied product 4, the heat radiation of the first circumferential groove 11 is enhanced, and thus the cooling effect by the first circumferential groove 11 becomes higher.

### Reference Signs List

- 1...: tire
- 2...: tread portion
- 3...: tread center portion
- 4...: shoulder portion
- 5...: tire
- 11...: first circumferential groove
- 12...: second circumferential groove
- 13...: lug groove
- 14...: lateral groove
- 15...: raised portion
- 20...: shoulder block row
- 21...: block
- 30...: control block row
- 31...: block
- 32...: first wall surface
- 33...: second wall surface
- 34...: first block corner portion
- 35...: second block corner portion
- 36...: first virtual surface
- 37...: second virtual surface
- 38...: virtual intersection position
- 41...: block
- 42...: first wall surface
- 43...: second wall surface
- 44...: first block corner portion
- 45...: second block corner portion
- 46...: first virtual surface
- 47...: second virtual surface
- 51...: block
- 52...: first wall surface
- 53...: second wall surface
- 54...: first block corner portion
- 55...: second block corner portion
- 56...: first virtual surface
- 57...: second virtual surface
- 58...: center line
- 61...: block
- 62...: first wall surface
- 63...: second wall surface
- 64...: first block corner portion
- 65...: second block corner portion
- 66...: first virtual surface
- 67...: second virtual surface
- 68...: center line
- 71...: block
- 72...: first wall surface
- 73...: second wall surface
- 74...: first block corner portion
- 75...: second block corner portion
- 76...: first virtual surface
- 77...: second virtual surface
- 78...: center line
- 81...: block
- 82...: first wall surface
- 83...: second wall surface
- 84...: first block corner portion
- 85...: second block corner portion
- 86...: first virtual surface
- 87...: second virtual surface
- 88...: center line
- F...: air flow direction
- G...: upstream side
- H...: downstream side
- K...: tire width direction
- R...: tire rotating direction
- S...: tire circumferential direction
- W...: groove width

## Claims

1. A tire (1) comprising:
a first circumferential groove (11);
two second circumferential grooves (12) adjacent to both sides of the first circumferential groove (11) in a tire width direction;
a plurality of lateral grooves (14) opened to the first circumferential groove (11) and the second circumferential groove (12); and
a plurality of blocks (31) on a tread portion partitioned by the first circumferential groove (11), the second circumferential groove (12), and the plurality of lateral grooves (14), an air flow in a direction opposite to a tire rotating direction (R) being generated in the first circumferential groove (11) and the two second circumferential grooves (12) during running of a vehicle; wherein
each block (31) of the plurality of blocks (31) has:
a first wall surface (32) formed from a position where the lateral groove (14) on a downstream side of the air flow is opened to the first circumferential groove (11), toward an upstream side of the air flow;
a second wall surface (33) formed from a position where the lateral groove (14) on the downstream side of the air flow is opened to the second circumferential groove (12), toward the upstream side of the air flow; and
a block corner portion (35) formed at a position where the lateral groove (14) on the upstream side of the air flow is opened to the second circumferential groove (12) ;
when the two blocks (31) on the upstream side and the downstream side of the air flow adjacent in a tire circumferential direction are viewed, a virtual surface (37) obtained by extending, on the downstream side of the air flow, the second wall surface (33) of the block (31) on the upstream side intersects with the block corner portion (35) of the block (31) on the downstream side or passes through a position in the second circumferential groove (12) which is apart from the block corner portion (35) in the tire width direction;
a groove width of the first circumferential groove (11) gradually increases toward the downstream side of the air flow at the first wall surface (32) of the block (31); and
the first wall surface (32) of the block (31) is a curved surface curved toward the inside of the lateral groove (14) on the downstream side of the air flow.

2. The tire (1) according to claim 1, wherein
when the two blocks (31) on the upstream side and the downstream side of the air flow adjacent in the tire circumferential direction are viewed, a virtual surface (36) obtained by extending, on the downstream side of the air flow, the first wall surface (32) of the block (31) on the upstream side is extended toward an inside of the lateral groove (14) between the two blocks (31).

3. The tire (1) according to claim 1 or 2, wherein
the first wall surface (32) of the block (31) is inclined toward the inside of the lateral groove (14) on the downstream side of the air flow with respect to the tire circumferential direction.

4. The tire (1) according to any of claims 1 to 3, wherein
the first circumferential groove (11) is arranged on a tread center portion (3); and
when the two blocks (31) on the upstream side and the downstream side of the air flow adjacent in the tire circumferential direction are viewed, a virtual surface (37) obtained by extending, on the downstream side of the air flow, the second wall surface (33) of the block (31) on the upstream side intersects with the block corner portion (35) of the block (31) on the downstream side or passes through a position in the second circumferential groove (12) outside the block corner portion (35) in the tire width direction.

5. The tire (1) according to any of claims 1 to 4, wherein
the groove width of the first circumferential groove (11) is wider than a groove width of the lateral groove (14) ; and
the groove width of the lateral groove (14) is wider than a groove width of the second circumferential groove (12) .

## Patentansprüche

1. Reifen (1), der Folgendes umfasst:
eine erste umlaufende Rille (11),
zwei zweite umlaufende Rillen (12), die zu beiden Seiten der ersten umlaufenden Rille (11) in einer Reifenbreitenrichtung benachbart sind,
mehrere seitliche Rillen (14), die zu der ersten umlaufenden Rille (11) und der zweiten umlaufenden Rille (12) geöffnet sind, und
mehrere Blöcke (31) auf einem Laufflächenabschnitt, der durch die erste umlaufende Rille (11), die zweite umlaufende Rille (12) und die mehreren seitlichen Rillen (14) unterteilt wird, wobei ein Luftstrom in einer Richtung, entgegengesetzt zu einer Reifendrehungsrichtung (R), in der ersten umlaufenden Rille (11) und den zwei zweiten umlaufenden Rillen (12) während des Laufens eines Fahrzeugs erzeugt wird, wobei
jeder Block (31) der mehreren Blöcke (31) Folgendes aufweist:
eine erste Wandfläche (32), die von einer Position, wo die seitliche Rille (14) auf einer stromabwärts gelegenen Seite des Luftstroms zu der ersten umlaufenden Rille (11) geöffnet ist, zu einer stromaufwärts gelegenen Seite des Luftstroms hin geformt ist,
eine zweite Wandfläche (33), die von einer Position, wo die seitliche Rille (14) auf der stromabwärts gelegenen Seite des Luftstroms zu der zweiten umlaufenden Rille (12) geöffnet ist, zu der stromaufwärts gelegenen Seite des Luftstroms hin geformt ist, und
einen Blockeckabschnitt (35), der an einer Position, wo die seitliche Rille (14) auf der stromaufwärts gelegenen Seite des Luftstroms zu der zweiten umlaufenden Rille (12) geöffnet ist, geformt ist,
wenn die zwei Blöcke (31) auf der stromaufwärts gelegenen Seite und der stromabwärts gelegenen Seite des Luftstroms, die in einer Reifenumfangsrichtung benachbart sind, betrachtet werden, eine virtuelle Oberfläche (37), die erhalten wird durch Verlängern, auf der stromabwärts gelegenen Seite des Luftstroms, der zweiten Wandfläche (33) des Blocks (31) auf der stromaufwärts gelegenen Seite, sich mit dem Blockeckabschnitt (35) des Blocks (31) auf der stromabwärts gelegenen Seite schneidet oder durch eine Position in der zweiten umlaufenden Rille (12) hindurchgeht, die von dem Blockeckabschnitt (35) in der Reifenbreitenrichtung getrennt ist,
eine Rillenbreite der ersten umlaufenden Rille (11) allmählich zu der stromabwärts gelegenen Seite des Luftstroms hin an der ersten Wandfläche (32) des Blocks (31) zunimmt und
die erste Wandfläche (32) des Blocks (31) eine gekrümmte Fläche ist, die zu der Innenseite der seitlichen Rille (14) hin auf der stromabwärts gelegenen Seite des Luftstroms gekrümmt ist.

2. Reifen (1) nach Anspruch 1, wobei,
wenn die zwei Blöcke (31) auf der stromaufwärts gelegenen Seite und der stromabwärts gelegenen Seite des Luftstroms, die in einer Reifenumfangsrichtung benachbart sind, betrachtet werden, eine virtuelle Oberfläche (36), die erhalten wird durch Verlängern, auf der stromabwärts gelegenen Seite des Luftstroms, der ersten Wandfläche (32) des Blocks (31) auf der stromaufwärts gelegenen Seite, zu einer Innenseite der seitlichen Rille (14) hin zwischen den zwei Blöcken (31) verlängert wird.

3. Reifen (1) nach Anspruch 1 oder 2, wobei
die erste Wandfläche (32) des Blocks (31) zu der Innenseite der seitlichen Rille (14) hin auf der stromabwärts gelegenen Seite des Luftstroms in Bezug auf die Reifenumfangsrichtung geneigt ist.

4. Reifen (1) nach einem der Ansprüche 1 bis 3, wobei
die erste umlaufende Rille (11) auf einem Laufflächen-Mittelabschnitt (3) angeordnet ist und,
wenn die zwei Blöcke (31) auf der stromaufwärts gelegenen Seite und der stromabwärts gelegenen Seite des Luftstroms, die in einer Reifenumfangsrichtung benachbart sind, betrachtet werden, eine virtuelle Oberfläche (37), die erhalten wird durch Verlängern, auf der stromabwärts gelegenen Seite des Luftstroms, der zweiten Wandfläche (33) des Blocks (31) auf der stromaufwärts gelegenen Seite, sich mit dem Blockeckabschnitt (35) des Blocks (31) auf der stromabwärts gelegenen Seite schneidet oder durch eine Position in der zweiten umlaufenden Rille (12) außerhalb des Blockeckabschnitt (35) in der Reifenbreitenrichtung hindurchgeht.

5. Reifen (1) nach einem der Ansprüche 1 bis 4, wobei
die Rillenbreite der ersten umlaufenden Rille (11) breiter ist als eine Rillenbreite der seitlichen Rille (14) und
die Rillenbreite der seitlichen Rille (14) breiter ist als eine Rillenbreite der zweiten umlaufenden Rille (12).

## Revendications

1. Pneu (1) comprenant:
une première rainure circonférentielle (11) ;
deux secondes rainures circonférentielles (12) adjacentes aux deux côtés de la première rainure circonférentielle (11) dans une direction de la largeur du pneu ;
une pluralité de rainures latérales (14) ouvertes sur la première rainure circonférentielle (11) et la seconde rainure circonférentielle (12) ; et
une pluralité de blocs (31) sur une portion formant bande de roulement partitionnée par la première rainure circonférentielle (11), la seconde rainure circonférentielle (12), et la pluralité de rainures latérales (14), un flux d'air dans une direction opposée à une direction de rotation (R) du pneu étant généré dans la première rainure circonférentielle (11) et les deux secondes rainures circonférentielles (12) pendant la marche d'un véhicule ; dans lequel
chaque bloc (31) de la pluralité de blocs (31) a :
une première surface de paroi (32) formée à partir d'une position où la rainure latérale (14) sur un côté aval du flux d'air est formée sur la première rainure circonférentielle (11), en direction d'un côté amont du flux d'air ;
une seconde surface de paroi (33) formée à partir d'une position où la rainure latérale (14) sur le côté aval du flux d'air est ouverte sur la seconde rainure circonférentielle (12), en direction du côté amont du flux d'air ; et
une portion en coin de bloc (35) formée au niveau d'une position où la rainure latérale (14) sur le côté amont du flux d'air est ouverte sur la seconde rainure circonférentielle (12) ;
lorsque les deux blocs (31) sur le côté amont et le côté aval du flux d'air, adjacents dans une direction circonférentielle du pneu sont visualisés, une surface virtuelle (37) obtenue en étendant, sur le côté aval du flux d'air, la seconde surface de paroi (33) du bloc (31) sur le côté amont croise la portion en coin de bloc (35) du bloc (31) sur le côté aval ou passe par une position dans la seconde rainure circonférentielle (12) qui est séparée de la partie en coin de bloc (35) dans la direction de la largeur du pneu ;
une largeur de rainure de la première rainure circonférentielle (11) augmente graduellement en direction du côté aval du flux d'air au niveau de la première surface de paroi (32) du bloc (31) ; et
la première surface de paroi (32) du bloc (31) est une surface incurvée, incurvée en direction de l'intérieur de la rainure latérale (14) sur le côté aval du flux d'air.

2. Pneu (1) selon la revendication 1, dans lequel
lorsque les deux blocs (31) sur le côté amont et le côté aval du flux d'air, adjacents dans la direction circonférentielle du pneu sont visualisés, une surface virtuelle (36) obtenue en étendant, sur le côté aval du flux d'air, la première surface de paroi (32) du bloc (31) sur le côté amont est étendue en direction d'un intérieur de la rainure latérale (14) entre les deux blocs (31).

3. Pneu (1) selon la revendication 1 ou 2, dans lequel
la première surface de paroi (32) du bloc (31) est inclinée en direction de l'intérieur de la rainure latérale (14) sur le côté aval du flux d'air par rapport à la direction circonférentielle du pneu.

4. Pneu (1) selon l'une quelconque des revendications 1 à 3, dans lequel
la première rainure circonférentielle (11) est agencée sur une portion formant centre de bande de roulement (3) ; et
lorsque les deux blocs (31) sur le côté amont et le côté aval du flux d'air, adjacents dans la direction circonférentielle du pneu sont visualisés, une surface virtuelle (37) obtenue en étendant, sur le côté aval du flux d'air, la seconde surface de paroi (33) du bloc (31) sur le côté amont croise la portion en coin de bloc (35) du bloc (31) sur le côté aval ou passe par une position dans la seconde rainure circonférentielle (12) à l'extérieur de la partie en coin de bloc (35) dans la direction de la largeur de pneu.

5. Pneu (1) selon l'une quelconque des revendications 1 à 4, dans lequel
la largeur de rainure de la première rainure circonférentielle (11) est plus large qu'une largeur de rainure de la rainure latérale (14) ; et
la largeur de rainure de la rainure latérale (14) est plus large qu'une largeur de rainure de la seconde rainure circonférentielle (12).
